## Europäisches Patentamt

## European Patent Office

## Office européen des brevets

(11) Veröffentlichungsnummer: **0 305 795 B1**

## EUROPÄISCHE PATENTSCHRIFT

(45) Veröffentlichungstag der Patentschrift: **11.10.95**

(21) Anmeldenummer: **88113206.2**

(22) Anmeldetag: **13.08.88**

(51) Int. Cl.6: **C08F 283/01**, C08F 285/00, C09D 167/08

(54) **Verfahren zur Herstellung von wässrigen Pfropfcopolymerisat- emulsionen und Verwendung der Emulsionen als Bindemittel für lufttrocknende wasserverdünnbare Anstrichmittel.**

(30) Priorität: **03.09.87 AT 2215/87**

(43) Veröffentlichungstag der Anmeldung:
**08.03.89 Patentblatt 89/10**

(45) Bekanntmachung des Hinweises auf die Patenterteilung:
**11.10.95 Patentblatt 95/41**

(84) Benannte Vertragsstaaten:
**BE CH DE ES FR GB IT LI NL SE**

(56) Entgegenhaltungen:
EP-A- 0 191 629          EP-A- 0 267 562
EP-A- 0 295 403          FR-A- 2 265 832
FR-A- 2 323 749          GB-A- 2 053 934

(73) Patentinhaber: **VIANOVA KUNSTHARZ AKTIEN-GESELLSCHAFT**
**Postfach 191**
**Leechgasse 21**
**A-8011 Graz (AT)**

(72) Erfinder: **Zückert, Bertram, Dr.**
**Krottendorfstrasse 90**
**A-8052 Graz (AT)**
Erfinder: **Klintschar, Gerfried, Dr.**
**Rieshang 20**
**A-8010 Graz (AT)**

**Beschreibung**

Die Erfindung betrifft ein Verfahren zur Herstellung von wäßrigen Pfropfcopolymerisatemulsionen, die durch Emulsionspolymerisation von Vinyl- und/oder (Meth)acrylmonomeren in Gegenwart von Emulgatorharzen auf der Basis von Polyolestern von (meth)acryl- und gegebenenfalls vinylmodifizierten trocknenden Fettsäuren erhalten werden.

Aufgrund der zunehmenden ökologischen Probleme wird der Zwang zu einer drastischen Reduzierung der Lösemittelemission auch auf dem Gebiet der Lacke und Farben immer stärker. Während auf dem Gebiet der industriell eingesetzten Einbrennlacke durch spezielle Verfahren, wie Elektrotauchlackierung oder Verwendung von High-solidsystemen oder Pulverlackierung eine wesentliche Reduzierung der Lösemittelemission bereits erreicht wurde, gibt es für andere Gebiete, wie Straßenmarkierungsfarben, Anstrichmittel für Holzoberflächen und auch für lufttrocknende Industrielacke auf Wasserbasis nur ein geringes Angebot. In den meisten Fällen entsprechen die Produkte nur in einzelnen Punkten den an sie gestellten Anforderungen.

Physikalisch trocknende Systeme auf Wasserbasis, wie Polymerisatdispersionen, sind den Produkten auf Lösemittelbasis bezüglich Streichbarkeit, Verlauf, Glanz und Fülle wesentlich unterlegen. Überdies neigen sie aufgrund ihrer Thermoplastizität bei Sonneneinstrahlung zu verstärkter Schmutzaufnahme und zum "Blocken", d. h. zum Verkleben von lackierten Flächen. Für den Einsatz als Straßenmarkierungsfarben haben sich Polymerisatdispersionen wegen schlechter Haltbarkeit als weitgehend unbrauchbar erwiesen. Bei Anwendung in Einschichtlacken zur Beschichtung von Eisenoberflächen versagen Polymerisatdispersionen im Korrosionsschutz. Um eine ausreichende Schutzwirkung zu erhalten, ist in der Regel ein zweifacher Anstrich mit einer Schichtstärke von mehr als 80 $\mu$m notwendig.

Mit wasserlöslichen Alkydharzen oder Alkydharzemulsionen können die Forderungen, wie sie an lufttrocknende Lacke gestellt werden, in verarbeitungstechnischer Hinsicht und bezüglich der Filmeigenschaften bereits weitgehend erfüllt werden. Ihr Einsatz ist aber durch die mangelnde Lagerstabilität der Produkte und die zu starke Gilbung der Filme bei der Alterung begrenzt.

Versuche, durch Mischen der beiden Bindemitteltypen die Nachteile der Einzelkomponenten zu überwinden, scheitern im allgemeinen an der mangelnden Verträglichkeit. Es wurde auch bereits versucht, die Herstellung der Polymerdispersion in Gegenwart von wasserverdünnbaren Alkydharzen vorzunehmen. Durch geeignete Wahl der Komponenten und Reaktionsbedinungen ist es in diesen Fällen leichter möglich, die gewünschte Verträglichkeit zu erreichen.

So werden in der US-A- 4 116 903 Copolymerdispersionen beschrieben, bei welchen wasserlösliche Alkydharze auf Basis von Isophthalsäure und Trimellithsäure als Emulgatorkomponenten verwendet werden. Durch diese Säuren wird im allgemeinen eine bessere Hydrolysestabilität der Alkydharze als mit dem sonst üblichen ortho-Phthalsäureanhydrid erreicht (siehe E.T. Turpin, Hydrolysis of Water-dispersible Resins, Journ. of Paint Techn , 47, 602, 40-46, March 1975 oder J.J. Engel, Problems of Airdrying Waterborne Alkyds, Water-borne + Higher Solids Coating Symposium, New Orleans Feb. 1983).Für die Praxis ist jedoch auch in diesem Fall die Stabilität der auf diese weise hergestellten Dispersionen nicht ausreichend.

Da Maleinsäureaddukte an ungesättigte Öle oder Fettsäuren Carboxylgruppen aufweisen, welche nicht wie Halbester durch Hydrolyse abgespalten werden können, hat man versucht, diese Produkte als Basis für die Polymerisation zu putzen. Emulsionen mit guter Stabilität werden gemäß der US-A- 2,941,968, durch Pfropfung von Vinylmonomeren auf Maleinsäureaddukte von trocknenden Ölen in wäßriger Emulsion oder gemäß der GB-A- 1 534 432, wo Maleinsäureaddukte von Fettsäureestern von Styrol-Allylalkohol-Copolymeren als Basis für eine Copolymerisation von (Meth)acrylsäureestern verwendet werden, erhalten. Bei der Herstellung von Lacken zeigt sich aber, daß Maleinsäureanhydridaddukte eine schlechte Verträglichkeit mit Sikkativen und Pigmenten aufweisen.

Gemäß der DE-A- 24 16 658 werden durch Reaktion von Acrylsäure oder Methacrylsäure mit polyungesättigten Fettsäuren bei 250 bis 300°C Addukte hergestellt, die anschließend nach den bekannten Verfahren durch Veresterung, vorzugsweise unter Verwendung von Polyglykolen, zu wasserverdünnbaren Alkydharzen umgesetzt werden. Die Produkte zeigen eine relativ schlechte Trocknung, da ein Großteil der Fettsäuren durch die Adduktbildung und durch die bei der notwendigen hohen Reaktionstemperatur auftretenden Dimerisierungen für die Filmbildung verloren geht. Überdies wird durch diese Adduktbildung ohne Verwendung von Polyglykolen bei der späteren Alkydharzbildung die Pigmentbenetzung wesentlich verschlechtert.

Aus den DE-B- 33 15 690 und DE-B- 33 15 691 sind Emulgatorkomponenten für die Herstellung von wäßrigen Emulsionen von Urethanalkydharzen bekannt, die durch Pfropfcopolymerisation von Mischungen von (Meth)acrylsäure mit (Meth)acrylestern und/oder Vinylmonomeren in Masse oder in Gegenwart organischer Lösungsmittel auf Fettsäure-Polyethylenglykol-Polyol-Ester erhalten werden.

Es wurde nun gefunden, daß Pfropfcopolymerisatemulsionen, die durch Emulsionspolymerisation von Vinyl- und/oder (Meth)acrylmonomeren in Gegenwart von Emulgatorharzen, die in der Zusammensetzung denen der obengenannten DE-Patentschriften ähnlich sind, erhalten werden, sowohl gegenüber üblichen Dispersionen, wie auch Alkydharzemulsionen wesentliche Vorteile aufweisen.

Die vorliegende Erfindung betrifft demgemäß ein Verfahren zur Herstellung von wäßrigen Pfropfcopolymerisatemulsionen, welches dadurch gekennzeichnet ist, daß man

(a) ein Polymerisations-/Kondensationsharz (B) mit einer Säurezahl zwischen 30 und 120 mg KOH/g durch Polymerisation von zumindest einem Teil von

40 - 70 Gew.-% trocknenden Fettsäuren mit

5 - 20 Gew.-% Methacrylsäure,

20 - 35 Gew.-% einer Mischung von Vinyl- und/oder (Meth)acryl-Monomeren, die außer der C-C-Doppelbindung keine weitere funktionelle Gruppe tragen und gegebenenfalls

bis zu 5 Gew.-% (Meth)acrylamid und, gegebenenfalls nach Zugabe des verbliebenen Rests der trocknenden Fettsäuren, durch Veresterung mit

5 bis 7 Gew.-% Polyolen mit 3 - 6 Hydroxylgruppen und gegebenenfalls

bis zu 15 Gew.-% eines Polyethylenglykols mit einer mittleren Molmasse (M) von 1000 - 3000,

wobei die Summe der Prozentzahlen 100 beträgt, herstellt,

(b) das Polymerisations-/Kondensationsharz, nach 50 bis 100%iger Neutralisation der Carboxylgruppen mit Ammoniak und/oder organischen Aminen mit Wasser, sowie gegebenenfalls unter Zusatz von untergeordneten Anteilen von organischen Hilfslösemitteln, auf einen Festkörpergehalt von 15 bis 40 % verdünnt und

(c) in dieser Lösung bei 60 bis 80°C in Gegenwart eines Initiators eine Mischung von Vinyl- und/oder (Meth)acrylmonomeren (A), die im wesentlichen außer der C-C-Doppelbindung keine weitere funktionelle Gruppe tragen, bis zu einem Polymerisationsumsatz von mindestens 95 % polymerisiert, wobei 40 - 70 Gew.-% der Monomerenmischung (A) und 30 - 60 Gew.-% (bezogen auf Feststoff) des Polymerisations-/Kondensationsharzes (B) eingesetzt werden.

Weiters betrifft die Erfindung die Verwendung dieser Pfropfcopolymerisatemulsionen als Bindemittel für lufttrocknende wasserverdünnbare Anstrichmittel.

Gegenüber den im Stand der Technik erwähnten Alkydharzemulsionen zeichnen sich die erfindungsgemäß hergestellten Produkte durch bessere Stabilität, raschere Trocknung und bessere Filmhärte aus. Gegenüber Dispersionen ist eine bessere Naßhaftung, bessere Oberflächenqualität, wie Glanz und Verlauf, sowie, durch oxidative Vernetzung und das Fehlen von nichtfilmbildenden Dispergiermitteln, eine bessere Wasserbeständigkeit festzustellen. Die erfindungsgemäß hergestellten Emulsionen bleiben - im Gegensatz zu den meisten Polymerdispersionen - auch bei wiederholtem Einfrieren und Auftauen gebrauchsfähig.

Als Monomere für die Komponente (A) werden im wesentlichen solche Vinyl- und/oder (Meth)acrylverbindungen verwendet, welche neben der C-C-Doppelbindung keine weitere reaktionsfähige Gruppe tragen. Beispiele für solche Monomere sind die Acrylsäureester oder die Methacrylsäureester von $C_1$-$C_8$-Monoalkoholen, Vinylacetat, sowie aromatische Vinylverbindungen, wie Styrol, alpha-Methylstyrol und Vinyltoluol. In untergeordnetem Maße können gegebenenfalls auch funktionelle Gruppen tragende Monomere mitverwendet werden. Beispielsweise können bis zu 5 Gew.-%, bezogen auf das Gesamtbindemittel (Festharz) auch OH-funktionelle Monomere, wie 2-Hydroxyethyl-methacrylat und/oder bis zu 2 Gew.-% auch carboxylfunktionelle Monomere, wie (Meth)acrylsäure und/oder bis zu 3 Gew.-% (Meth)acrylamid mitverwendet werden.

Bevorzugt werden für die Komponente (A) Mischungen von Styrol mit n-Butylacrylat und/oder 2-Ethylhexylacrylat und/oder $C_1$ bis $C_4$-Alkylmethacrylaten eingesetzt.

Die Komponente (B) ist ein Polymerisations/Kondensationsprodukt, welches aus 40 - 70 Gew.-% trocknenden Fettsäuren, 5 - 20 Gew.-% (Meth)acrylsäure, 20 - 35 Gew.-% einer Mischung von Vinyl- und/oder (Meth)acrylmonomeren, die außer der C-C-Doppelbindung keine weitere funktionelle Gruppe tragen, bis zu 5 Gew.-% (Meth)acrylamid, 5 - 7 Gew.-% Polyolen mit 3 bis 6 Hydroxylgruppen und aus bis zu 15 Gew.-% eines Polyethylenglykols mit einer Molmasse ($\overline{M}$) von 1000 - 3000 besteht. (Die Summe der Prozentanteile der die Komponente (B) aufbauenden Rohstoffe muß 100 ergeben.)

Die Komponente (B) wird nach folgendem Verfahren hergestellt:

Es wird zunächst ein Teil der trocknenden Fettsäuren in Masse oder in Gegenwart inerter Lösemittel mit den Monomeren unter Verwendung eines geeigneten Polymerisationsinitiators, wie Di-tert.-Butylperoxid, tert. Butylperbenzoat oder Cumolhydroperoxid bei 110 bis 150°C bis zu einem Polymerisationsumsatz von mind. 95 % polymerisiert und das Copolymer anschließend, nach Zugabe der restlichen Fettsäuren mit den Polyolen und gegebenenfalls dem Polyethylenglykol verestert. Die Veresterung wird so lange weitergeführt, bis die Säurezahl auf einen Wert abgesunken ist, der etwa 80 bis 95 % der durch die Methacrylsäure

3

bedingten Säurezahl entspricht. Es kann angenommen werden, daß dann die Fettsäuren weitestgehend eingebaut sind, während die infolge sterischer Hinderung langsamer reagierenden Carboxylgruppen der Methacrylsäure im Polmyer frei bleiben. Die Komponente (B) wird durch Vaccumdestillation von inerten Lösemitteln und den gegebenenfalls vorhandenen Restmonomeren befreit.

Bevorzugt werden ungesättigte Fettsäuren mit isolierten Doppelbindungen mit einer Jodzahl von mind. 140, vorzugsweise von 160 - 200 eingesetzt. Geeignet sind auch konjugiert ungesättigte Fettsäuren mit einer Jodzahl von mind. 125. Der Anteil an konjugiert ungesättigten Fettsäuren soll max. 25 % betragen. Die vor der anschließenden Veresterung zugesetzten restlichen Fettsäuren unterliegen nicht dieser Beschränkung.

Zur ersten Gruppe zählen u.a. Leinölfettsäure, Safflorfettsäure, Hanfölfettsäure und Perillaölfettsäure. Konjugiert ungesättigte Fettsäuren sind beispielsweise die verschiedenen Typen der dehydratisierten Rizinusölfettsäure oder der isomerisierten technischen Linolsäure.

Als Comonomere ohne weitere funktionelle Gruppe werden vorzugsweise zu mindestens 80 % solche eingesetzt, die in Lackbenzin lösliche Polymere ergeben. Solche Monomere sind Vinyltoluol, alpha-Methylstyrol bzw. die Acryl- und Methacrylsäureester von $C_4$-$C_8$-Alkoholen. In untergeordnetem Ausmaß können auch andere Monomere, wie Styrol oder Methylmethacrylat verwendet werden. (Meth)acrylamid kann gegebenenfalls in Mengen bis zu 5 % in diese Komponente eingebaut werden.

Als Polyole mit 3 bis 6 Hydroxylgruppen können u.a. Glycerin, die verschiedenen Trimethylolalkane, wie Trimethylolethan oder -propan, die handelsüblichen Pentaerythrit-Typen und Sorbit eingesetzt werden. Das eingesetzte Polyethylenglykol weist eine mittlere Molmasse $(\overline{M})$ zwischen 1000 und 3000 auf.

Zur Herstellung des Endproduktes wird in der Verfahrensstufe (b) das Polymerisations-/Kondensationsprodukt, nach 50 bis 100%iger Neutralisation der einer Säurezahl von 30 bis 120 mg KOH/g entsprechenden Carboxylgruppen und gegebenenfalls nach Zugabe von organischen Hilfslösemitteln mit Wasser auf einen Festkörpergehalt von ca. 15 bis 40 % verdünnt. Die Neutralisation kann auch gleichzeitig mit der Verdünnung durch Verwendung einer wäßrigen Lösung des Neutralisationsmittels erfolgen.

Als organische Hilfslösemittel werden bevorzugt Alkohole und/oder Glykolether, vorzugsweise das 2-Butoxyethanol-1, in Mengen zwischen 2 und 10 Gew.-%, bezogen auf das Endprodukt eingesetzt. Zur Neutralisation werden Ammoniak oder Alkylamine, wie Di- oder Triethylamine bzw. Alkanolamine, wie Dimethylethanolamin verwendet.

Für die Verfahrensstufe (c) wird die Emulsion des Polymerisations-/Kondensationsprodukts auf 60 bis 80°C erwärmt und die Monomerenmischung zusammen mit dem Polymerisationsinitiator und den gegebenenfalls vorgesehenen organischen Hilfslösemitteln unter Rühren im Verlauf von mehreren Stunden gleichmäßig zudosiert. Nach Ende der Zugabe wird die Temperatur gehalten, bis ein Reaktionsumsatz von mindestens 95 % erreicht ist.

Die Ermittlung des Reaktionsumsatzes erfolgt in einfachster Weise durch Ermittlung des Festkörpergehalts, Restmonomere werden, wenn erforderlich, durch Vakuumdestillation entfernt.

In einer vorteilhaften Ausführungsform werden nur etwa 70 - 90 % der Emulgatorkomponente (B) vorgelegt; die restlichen ca. 10 bis 30 % werden mit der Monomerenmischung zudosiert.

Als Initiatoren haben sich in dieser Verfahrensstufe Azoverbindungen, wie Azo-bis-isobutyrodinitril oder Azo-isovalerodinitril bewährt. Prinzipiell können aber auch organische bzw. anorganische Peroxide, wie Benzoylperoxid oder Kalium-peroxy-disulfat verwendet werden.

Die erfindungsgemäß hergestellten Emulsionen sind milchige bis transparente Flüssigkeiten mit mehr oder weniger ausgeprägter Strukturviskosität. Die Produkte sind bei Normaltemperatur mehrere Jahre haltbar, wobei bei der Lagerung ein langsamer Abbau der Strukturviskosität feststellbar ist.

Die Produkte zeigen als Anstrichmittel eine rasche physikalische Antrocknung und eine oxidative Filmvernetzung. Bevorzugte Anwendungsgebiete sind aufgrund dieser Charakteristik die Formulierung von rasch trocknenden Industrielacken, Straßenmarkierungsfarben sowie Klarlacken für Holz, wie Möbellacke, Lasuren oder Versiegelungen.

Zur Herstellung von Bindemitteln für Straßenmarkierungsfarben werden bevorzugt 50 bis 70 Gew.% (A) und 30 bis 50 Gew.% (B) eingesetzt.

Die Formulierung der Lacke, deren Herstellung und Verarbeitung erfolgt in der für diese Produkte üblichen Weise, die dem Fachmann bekannt ist bzw. der einschlägigen Literatur entnommen werden kann.

Die folgenden Beispiele erläutern die Erfindung. Alle Teil- oder Prozentangaben beziehen sich auf Gewichtseinheiten, soferne nichts anderes angegeben ist. Die angegebenen Grenzviskositätszahlen wurden in Chloroform ($CHCl_3$) oder Dimethylformamid (DMF) bei 20°C bestimmt und in ml/g angegeben.

(a) Herstellung der Polymerisations-/Kondensationsprodukte (Komponente (B)

KPP 1

30 Tle Leinölfettsäure und 5 Tle Xylol werden auf 135 bis 140 Grad C erwärmt. Bei dieser Temperatur wird innerhalb 6 bis 8 Stunden gleichzeitig eine Mischung aus 32 Tlen Isobutylmethacrylat, 6 Tlen Vinyltoluol und 21 Tlen Methacrylsäure sowie eine Mischung aus weiteren 11 Tlen der Leinölfettsäure, 3 Tlen tert.-Butylperbenzoat, 1 Tl Dibenzoylperoxid (50 %ig) und 5 Tlen Xylol gleichmäßig zugegeben. Nach Beendigung der Zugabe wird die Reaktionstemperatur beibehalten, bis eine Rückstandsbestimmung einen mindestens 95 %igen Polymerisationsumsatz ergibt. Bei zu langsamem Reaktionsfortgang wird der Ansatz mit 1 Tl tert.-Butylperbenzoat versetzt. Das Copolymerisat weist eine Säurezahl von 209 mg KOH/g und eine Grenzviskositätszahl (DMF) von 5,5 ml/g auf.

2040 Tle des so hergestellten Pfropfcopolymerisats werden mit 360 Tlen dehydratisierter Rizinusölfettsäure (DCO-Fettsäure), 255 Tlen Leinölfettsäure, 175 Tlen Pentaerythrit und 145 Tlen PEG 1500 bei 180°C unter azeotroper Abtrennung des Reaktionswassers mit Xylol bis zu einer Säurezahl von ca. 100 mg KOH/g verestert. Das Xylol wird unter Vakuum abgezogen.

Das Produkt hat folgende Kenndaten :

| Festkörpergehalt: | ca. 99 % |
|---|---|
| Säurezahl: | 85 mg KOH/g |
| Grenzviskositätszahl: | 8,5 ml/g ($CHCl_3$) |
| Fettsäuren: | 51 % |
| Polyole: | 6 % |
| PEG: | 5 % |

KPP 2

2040 Tle des in KPP 1 beschriebenen Pfropfcopolymerisates werden mit 280 Tlen dehydratisierter Rizinusölfettsäure und 140 Tlen Pentaerythrit, wie bei KPP 1 beschrieben, bis zu einer Säurezahl von 110 mg KOH/g verestert. Nach Abziehen des Kreislaufmittels resultiert ein Produkt mit folgenden Kenndaten:

| Festkörpergehalt: | ca. 99 % |
|---|---|
| Säurezahl: | 95 mg KOH/g |
| Grenzviskositätszahl: | 8,8 ml/g ($CHCl_3$) |
| Fettsäuren: | 45 % |
| Polyole: | 6 % |
| PEG: | 0 % |

Beispiele 1 und 2

Gemäß den in der Tabelle angegebenen Mengenverhältnissen wird die Hauptmenge der Komponente B nach Zugabe von 2-Butoxyethanol-1 mit Ammoniak neutralisiert und mit Wasser in eine Emulsion übergeführt.

Bei 70°C wird eine Mischung aus dem restlichen Teil der Komponente B, dem Initiator, Hilfslösemittel und den Monomeren im Verlauf von 6 Stden gleichmäßig zugegeben. Anschließend wird die Temperatur bei 70°C gehalten, bis der Reaktionsumsatz mind. 95 % beträgt. Die Restmonomeren werden vorteilhafterweise nach Zusatz von 0,1 % eines Entschäumungsmittels durch Vakuumdestillation entfernt. Der Festkörpergehalt wird durch Zugabe von Wasser auf 45 %, der pH-Wert mit Ammoniak auf ca. 9 eingestellt.

| Beispiel | 1 | 2 |
|---|---|---|
| KPP 1 | 40 | -- |
| KPP 2 | -- | 30 |
| 2-Butoxyethanol-1 | 5 | 3 |
| Ammoniak 23%ig in $H_2O$ | 3,6 | 4,5 |
| $H_2O$ | 101,65 | 100,75 |
| KPP 1 | 10 | -- |
| KPP 2 | -- | 10 |
| 2-Butoxyethanol-1 | 10 | 12 |
| Styrol | 30 | 35 |
| Isobutylmethacrylat | 20 | -- |
| n-Butylacrylat | -- | 25 |
| Azo-bis-isobutyrodinitril | 1,75 | 1,75 |
| Ausbeute | 222 | 222 |

Verwendung der gemäß Beispiel 1 und 2 hergestellten Emulsionen.

(1) Wasserverdünnbarer Lack für Kunststoffoberflächen, rot

180 Tle der Emulsion gemäß Beispiel 1 / 45%ig, werden in üblicher Weise auf einer Perlmühle unter Zusatz von 2,5 Tlen eines handelsüblichen wasserverträglichen Sikkativgemisches, 24 Tlen eines organischen Rotpigments sowie der üblichen Zusätze eines Hautverhinderungsmittels, eines Dispergiermittels, eines Antiabsetzmittels und eines handelsüblichen Entschäumers, sowie von 50 Tlen deionisiertem Wasser dispergiert. Der Lack wird mit deionisiertem Wasser auf Spritzviskosität verdünnt und mit einer Naßfilmstärke von ca. 50 μm auf Kunststoffoberflächen (Polystyrol, PVC, Polyamid), sowie auf grundiertes Stahlblech appliziert. Der Lack ist nach 15 Minuten klebfrei und zeigt nach 1 Woche Trocknungszeit gute Haftung und gute mechanische Eigenschaften.

(2) Wasserverdünnbare Straßenmarkierungsfarbe, weiß

33,2 Tle der Emulsion gemäß Beispiel 1/45%ig, werden mit 6 Tlen deionisiertem Wasser, 15 Tlen Titandioxid, 44,9 Tlen Calcit (Korngröße 1 - 20 μm) sowie den üblichen Zusätzen in einem Dissolver verarbeitet. Ein Probeauftrag auf Asphalt ergab bei einer Trockenschichtstärke von 180 μm eine Trocknungszeit von ca. 30 Minuten. Die Beschichtung zeigte gute Wasserfestigkeit und Abriebfestigkeit.

(3) Wasserverdünnbarer Klarlack für Holz

100 Tle der Emulsion gemäß Beispiel 2/45%ig, wurden mit 2,5 Tlen einer handelsüblichen wasserdispergierbaren Sikkativkombination versetzt und auf geschliffene Holzplatten aufgetragen. Die Beschichtung war nach ca. 30 Minuten griffest und nach 1 Woche kratzfest.

**Patentansprüche**

1. Verfahren zur Herstellung von wäßrigen Pfropfcopolymerisatemulsionen, dadurch gekennzeichnet, daß man

   (a) ein Polymerisations-/Kondensationsharz (B) mit einer Säurezahl zwischen 30 und 120 mg KOH/g durch Polymerisation von zumindest einem Teil von

   40 - 70 Gew.-% trocknenden Fettsäuren mit

   5 - 20 Gew.-% Methacrylsäure,

   20 - 35 Gew.-% einer Mischung von Vinyl- und/oder (Meth)acryl-Monomeren, die außer der C-C-Doppelbindung keine weitere funktionelle Gruppe tragen und gegebenenfalls

   bis zu 5 Gew.-% (Meth)acrylamid und, gegebenenfalls nach Zugabe des verbliebenen Restes der trocknenden Fettsäuren, durch Veresterung mit

   5 bis 7 Gew.-% Polyolen mit 3 - 6 Hydroxylgruppen und gegebenenfalls

   bis zu 15 Gew.-% eines Polyethylenglykols mit einer mittleren Molmasse ($\overline{M}$) von 1000 - 3000, wobei die Summe der Prozentzahlen 100 beträgt, herstellt,

   (b) das Polymerisations-/Kondensationsharz, nach 50 bis 100%iger Neutralisation der Carboxylgruppen mit Ammoniak und/oder organischen Aminen mit Wasser, sowie gegebenenfalls unter Zusatz von untergeordneten Anteilen von organischen Hilfslösemitteln, auf einen Festkörpergehalt von 15 bis 40 % verdünnt und

   (c) in dieser Lösung bei 60 bis 80 °C in Gegenwart eines Initiators eine Mischung von Vinyl- und/oder (Meth)acrylmonomeren (A), die im wesentlichen außer der C-C-Doppelbindung keine weitere funktionelle Gruppe tragen, bis zu einem Polymerisationsumsatz von mindestens 95 % polymerisiert, wobei 40 - 70 Gew.-% der Monomerenmischung (A) und 30 - 60 Gew.-% (bezogen auf Feststoff) des Polymerisations-/Kondensationsharzes (B) eingesetzt werden.

2. Verfahren nach Anspruch 1, dadurch gekennzeichnet, daß man als Monomere in der Komponente (A), bezogen auf das Gesamtbindemittel der Emulsion (Festharz) bis zu 5 Gew.-% hydroxylfunktionelle Monomere und/oder bis zu 2 Gew.-% carboxylfunktionelle Monomere und/oder bis zu 3 Gew.-% (Meth)acrylamid einsetzt.

3. Verfahren nach den Ansprüchen 1 und 2, dadurch gekennzeichnet, daß man als Komponente (A) Monomerenmischungen aus Styrol und n-Butylacrylat und/oder 2-Ethylhexylacrylat und/oder $C_1$-$C_4$-Alkylmethacrylaten einsetzt.

4. Verfahren nach den Ansprüchen 1 bis 3, dadurch gekennzeichnet, daß man für die Pfropfpolymerisation der Monomerenmischung als Fettsäuren isoliert ungesättigte Fettsäuren mit einer Jodzahl von über 140, gegebenenfalls in Mischung mit maximal 25 % konjugiert ungesättigten Fettsäuren, einsetzt.

5. Verfahren nach den Ansprüchen 1 bis 4, dadurch gekennzeichnet, daß man bei der Herstellung der Komponente (B) die Veresterung so weit führt, bis die Säurezahl 80 bis 95 % der durch die eingesetzte Methacrylsäure bedingten Säurezahl entspricht.

6. Verfahren nach den Ansprüchen 1 bis 5, dadurch gekennzeichnet, daß man für die Komponente (B) als Monomere, die außer der C-C-Doppelbindung keine weitere funktionelle Gruppe tragen, zu mindestens 80 % solche einsetzt, die in Lackbenzin lösliche Polymere ergeben.

7. Verfahren nach Anspruch 6, dadurch gekennzeichnet, daß man als Monomere Vinyltoluol und/oder alpha-Methylstyrol und/oder $C_4$ bis $C_8$-alkyl-(meth)acrylate einsetzt.

8. Verfahren nach den Ansprüchen 1 bis 7, dadurch gekennzeichnet, daß man in der Stufe (C) nur 70 bis 90 % der Komponente (B) als Emulsion vorlegt und die restlichen 10 bis 30 % mit den Monomeren der Komponente (A) zugibt.

9. Verfahren nach den Ansprüchen 1 bis 8, dadurch gekennzeichnet, daß man bei der Herstellung von Bindemitteln für Straßenmarkierungsfarben 50 bis 70 Gew.-% der Komponente (A) und 30 bis 50 Gew.-% der Komponente (B) einsetzt.

**10.** Verwendung der Pfropfcopolymerisatemulsionen nach den Ansprüchen 1 bis 8, als Bindemittel für lufttrocknende wasserverdünnbare Anstrichmittel.

**11.** Verwendung der Pfropfcopolymerisatemulsionen nach den Ansprüchen 1 bis 9 als Bindemittel in wasserverdünnbaren Straßenmarkierungsfarben.

**Claims**

**1.** Process for the preparation of aqueous graft copolymer emulsions, characterized in that

(a) an addition polymerization/condensation resin (B) having an acid number of between 30 and 120 mg of KOH/g is prepared by polymerizing at least a part of

40 - 70% by weight of drying fatty acids with

5 - 20% by weight of methacrylic acid,

20 - 35% by weight of a mixture of vinyl and/or (meth)acrylic monomers which contain no functional group other than the C-C double bond, and, if desired,

up to 5% by weight of (meth)acrylamide and, if desired after addition of the remaining part of the drying fatty acids, by esterification with

from 5 to 7% by weight of polyols having 3 - 6 hydroxyl groups and, if desired,

up to 15% by weight of a polyethylene glycol having an average molecular mass ($\overline{M}$) of 1000 - 3000,

the sum of the percentages being 100,

(b) the addition polymerization/condensation resin, following from 50 to 100% neutralization of the carboxyl groups with ammonia and/or organic amines with water and, if desired, with the addition of minor proportions of organic auxiliary solvents, is diluted to a solids content of from 15 to 40%, and

(c) in this solution, at from 60 to 80°C in the presence of an initiator, a mixture of vinyl and/or (meth)-acrylic monomers (A), which essentially carry no functional group other than the C-C double bond, is polymerized up to a degree of polymerization of at least 95%, employing 40 - 70% by weight of the monomer mixture (A) and 30 - 60% by weight (based on solids) of the addition polymerization/condensation resin (B.

**2.** Process according to Claim 1, characterized in that the monomers employed in component (A), based on the total binder of the emulsion (solid resin) are up to 5% by weight of hydroxyl-functional monomers and/or up to 2% by weight of carboxyl-functional monomers and/or up to 3% by weight of (meth)acrylamide.

**3.** Process according to Claims 1 and 2, characterized in that, as component (A), monomer mixtures of styrene and n-butyl acrylate and/or 2-ethylhexyl acrylate and/or $C_1$-$C_4$-alkyl methacrylates are employed.

**4.** Process according to Claims 1 to 3, characterized in that the fatty acids employed for the graft polymerization of the monomer mixture are fatty acids containing isolated unsaturation, having an iodine number of more than 140, if desired as a mixture with not more than 25% of fatty acids containing conjugated unsaturation.

**5.** Process according to Claims 1 to 4, characterized in that, in the course of preparing component (B), the esterification is continued until the acid number corresponds to from 80 to 95% of the acid number resulting from the methacrylic acid employed.

**6.** Process according to Claims 1 to 5, characterized in that for component (B), as monomers which carry no functional group other than the C-C double bond, use is made to the extent of at least 80% of those which result in polymers which are soluble in white spirit.

**7.** Process according to Claim 6, characterized in that the monomers employed are vinyltoluene and/or alpha-methylstyrene and/or $C_4$ to $C_8$-alkyl (meth)acrylates.

**8.** Process according to Claims 1 to 7, characterized in that in step (c) only from 70 to 90% of component (B) is introduced as initial charge in emulsion form and the remaining from 10 to 30% is added with the monomers of component (A).

8

9. Process according to Claims 1 to 8, characterized in that, when preparing binders for roadmarking paints, from 50 to 70% by weight of component (A) and from 30 to 50% by weight of component (B) are employed.

10. Use of the graft copolymer emulsions according to Claims 1 to 8 as binders for air-drying water-dilutable coating compositions.

11. Use of the graft copolymer emulsions according to Claims 1 to 9 as binders in water-dilutable roadmarking paints.

**Revendications**

1. Procédé de préparation d'émulsions aqueuses de copolymères greffés, caractérisé en ce que l'on prépare
   (a) une résine de polymérisation/condensation (B) ayant un indice d'acide entre 30 et 120 mg de KOH/g par polymérisation d'au moins une partie
   de 40 - 70% en poids d'acides gras siccatifs avec
   5 - 20% en poids d'acide méthacrylique,
   20 - 35% en poids d'un mélange de monomères vinyliques et/ou (méth)acryliques qui, en dehors de la double liaison C-C, ne sont porteurs d'aucun autre groupe fonctionnel, et éventuellement
   jusqu'à 5% en poids de (méth)acrylamide et, le cas échéant, après addition du restant des acides gras siccatifs, par estérification avec
   5 à 7% en poids de polyols avec 3-6 groupes hydroxyles et, éventuellement jusqu'à 15% en poids d'un polyéthylèneglycol d'une masse moléculaire moyenne (M) de 1000-3000, la somme des pourcentages s'élevant à 100,
   (b) qu'après 50 à 100% de neutralisation des groupes carboxyles avec de l'ammoniaque et/ou des amines organiques, on dilue la résine de polymérisation/condensation par addition de faibles fractions de solvants auxiliaires organiques, jusqu'à un taux de solides de 15 à 40% et
   (c) que, dans cette solution, on polymérise entre 60 et 80°C en présence d'un amorceur un mélange de monomères vinyliques et/ou (méth)acryliques (A) qui, pour l'essentiel, ne sont porteurs d'aucun autre groupe fonctionnel en dehors de la double liaison C-C, jusqu'à un taux de conversion de la polymérisation d'au moins 95%, moyennant quoi on met en oeuvre 40-70% en poids du mélange de monomères (A) et 30-60% en poids (par rapport à la matière solide) de la résine de polymérisation/ condensation (B).

2. Procédé selon la revendication 1, caractérisé en ce qu'on met en oeuvre en tant que monomères dans le composant (A), par rapport au liant total de l'émulsion (résine solide), jusqu'à 5% en poids de monomères à fonctionnalité hydroxyle et/ou jusqu'à 2% en poids de monomères à fonctionnalité carboxyle et/ou jusqu'à 3% en poids de (méth)acrylamide.

3. Procédé selon les revendications 1 et 2, caractérisé en ce qu'on met en oeuvre en tant que composant (A) des mélanges de monomères à partir de styrène et d'acrylate de n-butyle et/ou d'acrylate de 2-éthylhexyle et/ou de méthacrylates d'alkyle en $C_1$-$C_4$.

4. Procédé selon les revendications 1 à 3, caractérisé en ce que, pour la polymérisatin greffée du mélange de monomères, on met en oeuvre en tant qu'acides gras des acides gras à insaturation isolée avec un indice d'iode supérieur à 140, éventuellement en mélange avec au maximum 25% d'acides gras insaturés conjugués.

5. Procédé selon les revendications 1 à 4, caractérisé en ce que, lors de la préparation du composant (B), on conduit l'estérification jusqu'au point où l'indice d'acide correspond à 80 jusqu'à 95% de l'indice d'acide dû à l'acide méthacrylique mis en oeuvre.

6. Procédé selon les revendications 1 à 5, caractérisé en ce que, pour le composant (B), on met en oeuvre comme monomères qui ne sont porteurs d'aucun autre groupe fonctionnel en dehors de la double liaison C-C, au moins 80% de ceux qui fournissent des polymères solubles dans le white spirit.

**7.** Procédé selon la revendication 6, caractérisé en ce qu'on met en oeuvre en tant que monomères du vinyltoluène et/ou de l'alpha-méthylstyrène et/ou des (méth)acrylates d'alkyle en $C_4$ à $C_8$.

**8.** Procédé selon les revendications 1 à 7, caractérisé en ce que, dans l'étape (C), on ne charge que 70 à 80% du composant (B) sous forme d'émulsion et ajoute les 10 à 30% restants avec les monomères du composant (A).

**9.** Procédé selon les revendications 1 à 8, caractérisé en ce que, pour la préparation de liants destinés aux peintures pour le marquage des routes, on met en oeuvre 50 à 70% en poids du composant (A) et 30 à 50% en poids du composant (B).

**10.** Utilisation des émulsions de copolymères greffés selon les revendications 1 à 8 comme liants pour peintures séchant à l'air diluables à l'eau.

**11.** Utilisation des émulsions de copolymères greffés selon les revendications 1 à 9 comme liants dans des peintures pour le marquage des routes diluables à l'eau.